# EUROPÄISCHE PATENTSCHRIFT

(11) **EP 0 411 411 B1**
(45) Veröffentlichungstag und Bekanntmachung des Hinweises auf die Patenterteilung: **05.05.1993**
(21) Anmeldenummer: 90113921.2
(22) Anmeldetag: 20.07.1990
(51) Int. Cl.: B65B 35/04, B65G 47/51

(54) **Verfahren zum Überführen von auf einem endlosen Förderer in Querreihen kontinuierlich ankommenden Gegenständen, insbesondere Süsswarenteilen, wie Schokoladetafeln, Riegeln, Pralinen usw. sowie Verpackungsanlage zur Durchführung des Verfahrens**
Method for transferring continuously moving transverse lines of objects on an endless conveyor, particularly confectionery products such as chocolate bars, pralines and apparatus therefor
Procédé de transfert de rangées transversales d'objets se déplaçant de manière continue sur un convoyeur sans fin, en particulier produits de confiserie tels que tablettes de chocolat, barres, pralines, ainsi qu'installation de mise en oeuvre du procédé

(30) Priorität: 31.07.1989 DE 3925272
(43) Veröffentlichungstag der Anmeldung: 06.02.1991
(73) Patentinhaber: Klöckner Hänsel GmbH, 30024 Hannover (DE)
(72) Erfinder: Hogenkamp, Wilhelm, D-3000 Hannover (DE)
(74) Vertreter: Rehberg, Elmar, Dipl.-Ing.

(56) Entgegenhaltungen:
- GB-A- 2 015 458
- GB-A- 2 025 882
- US-A- 3 608 698

## Beschreibung

Die Erfindung bezieht sich auf ein Verfahren zum Überführen von auf einem endlosen Förderer in Querreihen kontinuierlich ankommenden Gegenständen, insbesondere Süßwarenteilen, wie Schokoladetafeln, Riegeln, Pralinen usw., in mehrere Packmaschinen, wobei die Gegenstände reihenweise über eine erste Weiche entweder der vorangehenden Packmaschine oder der nachfolgenden Packmaschine zugeführt, vor jeder Packmaschine auf einem Austragsband zu einer Reihe zusammengefaßt und in jeder Packmaschine verpackt werden. Die angesprochenen Gegenstände, insbesondere Schokoladetafeln, werden kontinuierlich in einer Herstellanlage hergestellt und ebenso kontinuierlich auf einem endlosen Förderer in Querreihen nebeneinanderliegend einer Verpackungsanlage zugeführt, die mehrere Packmaschinen aufweist, wobei die Gesamtkapazität der Packmaschinen zur Bildung einer Reserve größer ausgebildet sein muß als die Kapazität der Herstellanlage, damit bei Betriebsstörungen insbesondere an den Packmaschinen die hergestellten Gegenstände dennoch aufgenommen bzw. verpackt werden können. Bei solchen Störungen im Bereich der Packmaschine handelt es sich um relativ häufig vorkommende Störungen, die eine vergleichsweise kurzzeitige Betriebsunterbrechung erfordern. So muß die Packmaschine in nahezu regelmäßigen Abständen jeweils stillgesetzt werden, um den normalen Rollenwechsel des Verpackungsmaterials herbeizuführen und die Packmaschine anschließend wieder betriebsbereit zu machen. Im Bereich anderer Aggregate, beispielsweise im Bereich der verschiedenen Bändern und der Weichen, können auch Betriebsstörungen auftreten, beispielsweise verursacht durch unvollständig ausgegossene Schokoladetafeln oder durch zerbrochene Schokoladetafeln, die so nicht in den Verpackungsvorgang eingeschleust werden dürfen. Es sind hier entsprechende Überwachungsorgane vorgesehen, um dann eine Betriebsunterbrechung an der Packmaschine oder der betreffenden Weiche o. dgl. herbeizuführen. Um diesen normalen Störungen, die nicht vermeidbar sind, entgegenzutreten, wird eine Verpackungsanlage immer mit einer sogenannten Reserve ausgelegt, d. h. die Gesamtheit der Packmaschinen besitzt eine größere Kapazität als es der Herstellanlage für die Süßwarenteile entspricht. Wenn alle Packmaschinen betriebsbereit sind, kann dann sogar manchmal eine Packmaschine als Reserve stillstehen oder nur mit verminderter Leistung betrieben werden.

Die Herstellanlage arbeitet in aller Regel kontinuierlich, also auch über Frühstücks- und sonstige Pausenzeiten hinweg oder sogar kontinuierlich über eine gesamte Arbeitswoche. In den Pausenzeiten werden die Packmaschinen abgestellt, weil diese ohne menschliche Überwachung nicht betrieben werden. Die Herstellanlage läuft aber in der Regel auch während der Pausenzeiten durch, so daß die kontinuierlich ankommenden Gegenstände entweder gespeichert oder in einen Überlauf an der Verpackungsanlage abgeschoben werden müssen. Es ist bekannt, aus einem solchen Überlauf die Gegenstände dann wieder einzuschmelzen und die Masse erneut der Herstellanlage zuzuführen. Diese Möglichkeit ergibt sich jedoch nur bei ungefüllter Ware. Ansonsten bleibt nichts übrig, als im Arbeitsablauf während Pausenzeiten andere Arbeitskräfte als Ersatz an der Verpackungsanlage einzusetzen, damit die Packmaschinen ebenfalls kontinuierlich betrieben und die normal auftretenden Betriebsstörungen in der jeweils dafür vorgesehenen Zeit beseitigt werden können.

Aus der DE-PS 28 31 323 ist ein Verfahren und eine Verpackungsanlage der eingangs beschriebenen Art bekannt. Dabei werden die Gegenstände in Querreihen kontinuierlich auf einem endlosen Förderer herangeführt. Im Bereich einer Packmaschine ist zwischen einem Zuführband und einem Weitergabeband eine Weiche vorgesehen. Die Weiche führt in der einen Stellung zu dem Weitergabeband und in der anderen Stellung über weitere zwischengeschaltete Transportmittel zu einem Austragsband. Das Austragsband ist etwa im Winkel von 90° zu dem Zuführband und dem Weitergabeband angeordnet, so daß aus mehreren Querreihen dann auf dem Austragsband eine kontinuierliche Reihe von Gegenständen gebildet werden kann, die so der Packmaschine zugeführt und dort verpackt werden. Wenn die Packmaschine bzw. das Austragsband der zugehörigen Packmaschine nicht aufnahmebereit ist, verbleibt die Weiche in einer Stellung, bei der die Reihen der Gegenstände von dem Zuführband auf das Weitergabeband übergeben werden. Am Ende des Weitergabebands schließt sich das jeweilige Zuführband einer nachfolgenden Packmaschine an, wobei auch in deren Bereich wiederum eine Weiche und ein Weitergabeband vorgesehen sind. Auf diese Art und Weise können mehrere Packmaschinen abzweigend in einer Förderrichtung nebeneinander vorgesehen sein. Das Weitergabeband der letzten Packmaschine kann zu einem Überlauf führen, über den Gegenstände abgeführt werden müssen, wenn sie durch die Gesamtheit der Packmaschine nicht aufgenommen werden können. Nachteilig an dieser bekannten Verpackungsanlage ist es, daß eine Speichermöglichkeit nicht vorgesehen ist. Wenn man nicht in einem Überlauf arbeiten will, bleibt hier nur die Möglichkeit, in Betriebspausen entweder auch die Herstellungsanlage stillzusetzen oder die die Packmaschinen beaufsichtigenden Menschen auch in Pausenzeiten durch andere zu ersetzen.

Es ist auch bereits bekannt, das Weitergabeband der letzten Packmaschine vergleichsweise größer auszubilden, um auf diesem Band gleichsam einen Speicher zu bilden, der eine gewisse Menge an Gegenständen aufzunehmen in der Lage ist.

Dieses Weitergabeband kann dann reversierbar gesteuert werden, so daß nach der Arbeitspause, wenn alle Packmaschinen aufnahmebereit sind und die letzte Packmaschine als Reserve keine Ware aus der Herstellungsmaschine aufnimmt, mit dieser letzten Packmaschine Gegenstände von dem Speicherband aufgenommen und verpackt werden können. Nachteilig ist die geringe Speicherkapazität, die gerade in Verbindung mit Hochleistungs-Herstellanlagen sich derart nachteilig auswirkt, daß unter Umständen nur die Produktion von allenfalls etwa einer Minute aufgenommen werden kann.

Es ist daher bereits auch schon bekannt, am Ende einer Verpackungsanlage einen Kettenspeicher anzuordnen, der eine vergleichsweise große Aufnahmekapazität hat. Es handelt sich hier um turmartige Anlagen, in denen über Ketten geführte Gondeln die Aufnahme der Gegenstände gestatten. Die Ketten sind dabei über ein System von Umlenkrollen geführt, die unabhängig voneinander beweglich sind, so daß ein solcher Speicher auch mit jeweils unterschiedlichen Mengen gleichzeitig befüllt und auch entleert werden kann. Eine Entleerung kann allerdings nur dann stattfinden, wenn auch eine zugehörige aufnahmebereite Packmaschine vorhanden ist. Gewöhnlich ist der Ausgang des Speichers mit eine Rückführeinrichtung verbunden, die gespeicherte Gegenstände nach rückwärts in die Verpackungsanlage einspeichern können, wo sie dort einer Reserve an aufnahmebereiten Packmaschinen zugeführt werden können. Der Nachteil eines solchen Speichers besteht darin, daß er in der Regel nur über die letzte Packmaschine entleert werden kann, so daß die Entleerung langsam vor sich geht. Auch in der Befüllung ist ein solcher Speicher begrenzt, weil in ihm erhebliche Massen bewegt werden müssen, die es in der Regel nicht gestatten, die gesamten ankommenden Gegenstände aufzunehmen. Ein solcher Speicher ist somit nicht geeignet, zur Überbrückung von Pausenzeiten zu denen, in denen sämtliche Packmaschinen stillstehen.

Man hat auch bereits vorgeschlagen, einen solchen Zentralspeicher nicht am Ende der Verpackungsanlage, also den Packmaschinen nachgeordnet, sondern zu Beginn der Verpackungsanlage, also zwischen der Herstellmaschine und der ersten Packmaschine, anzuordnen. Dies hat jedoch den Nachteil, daß sämtliche zu verpackenden Gegenstände durch diesen Speicher hindurchgeführt werden müssen, und zwar, obwohl an sich die Packmaschinen in ihrer Gesamtzahl oder teilweise aufnahmebereit wären. Das Hindurchführen von Gegenständen durch Speicher, dort, wo es an sich nicht nötig wäre, hat wiederum den grundsätzlichen Nachteil, daß beim Einspeichern der Gegenstände und beim Ausspeichern aus den Böden der Gondeln jeweils eine Relativbewegung zwischen dem Gegenstand und der Auflagefläche stattfindet. Eine solche Relativbewegung ist nachteilig, weil dabei Teile der Gegenstände abbröckeln können, so daß solche Speicher, durch die die gesamte produzierte Ware hindurchgeführt wird, einer vergleichsweise schnellen Verschmutzung unterliegen. Werden längliche Artikel produziert, so besteht beim Einbringen und beim Herausholen der Gegenstände in bzw. aus dem Speicher die Neigung zum Verdrehen, also zum Verlassen einer ausgerichteten, in Förderrichtung weisenden Lage, so daß es oft erforderlich wird, diese Gegenstände nach dem Speicher erneut auszurichten, um sie dann den einzelnen Packmaschinen zuzuführen. Ein solcher, vorgeschalteter Zentralspeicher ist im übrigen nur anwendbar bei vergleichsweise langsam laufenden Herstellanlagen. Durch die erheblichen Massen, die im Speicher bewegt werden müssen, kann der Speicher weder schnell befüllt noch schnell entleert werden.

Aus diesem Grund ist auch bereits vorgeschlagen worden, den einzelnen Packmaschinen einer Verpackungsanlage nicht einen vergleichsweise großen Zentralspeicher vorzuordnen, sondern mehrere kleine Speicher. Diese sind dann so angeordnet, daß die auf dem endlosen Förderer kontinuierlich ankommenden Gegenstände mit Hilfe komplizierter Verteilungsstationen auf die einzelnen Speicher aufgeteilt werden. Jedem Speicher ist seine zugehörige Packmaschine nachgeordnet, so daß die betreffende Packmaschine nur über den ihr vorgeordneten Speicher bedient werden kann. Eine solche Verpackungsanlage hat den Nachteil, daß beim Auftreten einer Störung in einem Speicher die aufnahmebereite Packmaschine keine Gegenstände mehr erhält. Umgekehrt kann eine nicht-aufnahmebereite Packmaschine, beispielsweise beim Rollenwechsel, dazu führen, daß der vorgeschaltete Speicher vollständig befüllt wird, so daß dann die Herstellmaschine stillgesetzt werden muß, weil der betreffende Speicher nicht mehr aufnahmebereit ist.

Der Erfindung liegt die Aufgabe zugrunde, ein Verfahren und eine Verpackungsanlage zur Durchführung des Verfahrens aufzuzeigen, mit denen es möglich ist, kontinuierlich ankommende Gegenstände möglichst auf direktem Wege Packmaschinen zuzuleiten und dort zu verpacken. Sollte dies nicht möglich sein, weil an einer oder mehreren Packmaschinen betriebsnotwendige Störungen, wie Rollenwechsel o. dgl., auftreten, dann sollte, wenn es erforderlich wird, eine Speicherung der Gegenstände erfolgen. Bei weitreichenderen Störungen, wie beispielsweise beim Stillsetzen sämtlicher Packmaschinen in einer Arbeitspause, soll es möglich sein, bei großer Aufnahmekapazität der weiterhin kontinuierlich ankommenden Gegenstände durchzuführen und diese Speicherung beispielsweise nach der Pause wieder abzuarbeiten. Auf jeden Fall soll das Stillsetzen der Herstellungsmaschine wie auch die Erzeugung eines Überlaufs in all diesen Fällen möglichst vermieden werden.

Erfindungsgemäß wird dies bei dem Verfahren der eingangs beschriebenen Art dadurch erreicht, daß die Gegenstände bei Bedarf reihenweise im Bereich einer oder mehrerer gestörter oder ungestörter Packmaschinen über je eine zweite Weiche unabhängig von der ersten Weiche je einem Speicher zugeführt und gespeichert werden, und daß die Speicher nacheinander bei Überkapazität an aufnahmebereiten Packmaschinen entleert werden. Die Erfindung wendet sich damit vom Stand der Technik ab. Es wird weder ein Zentralspeicher am Ende der Verteilungsstraße hinter der letzten Packmaschine, noch den Packmaschinen vorgeordnet vor der ersten Packmaschine angewendet. Es findet auch keine Aufteilung der Verteilungsstraße in mehrere, je einer Packmaschine vorgeordnete Speicher statt, sondern es wird gleichsam im Bereich jeder einzelnen Packmaschine ein einzelner Speicher bereitgestellt, der unabhängig davon, ob seine ihm zugeordnete Packmaschine aufnahmebereit ist oder nicht, mit Gegenstände beschickt werden kann, die dann in diesem einzelnen Speicher zwischengespeichert werden. Jeder einzelne Speicher ist damit in der Lage, solche Gegenstände aufzunehmen, die an sich nicht nur seiner Packmaschine, sondern auch sämtlichen übrigen Packmaschinen zugeordnet wären. Es genügt, wenn jeder Speicher nur über seine zugehörige Packmaschine entleert werden kann. Die Anlage arbeitet immer mit einer Überkapazität an Packmaschinen, d. h. die Gesamtkapazität der Packmaschinen ist größer als die Leistung der Herstellmaschine, so daß immer eine Reserve gebildet wird. Diese Reserve kann durchaus auch kleiner sein als eine ganze Packmaschine, z. B. können vier Packmaschinen vorgesehen sein, wenn die Leistung der Herstellmaschine 3,3 Packmaschinen entspricht, so daß die Reserve dann 0,7 x Packmaschine beträgt. Diese Abstimmung reicht durchaus aus, weil außer den Packmaschinen eine ebenso große Zahl von Speichern zur Verfügung stehen, die parallel zu einer oder mehreren Packmaschinen oder auch beim Stillstand sämtlicher Packmaschinen allein betrieben werden und die ankommende Produktion aus der Herstellmaschine aufnehmen können. Wichtig ist, daß die zweite Weiche unabhängig von der ersten Weiche ist, und zwar im Bereich jeder Einheit aus Packmaschine und Speicher, damit selbst im Bereich einer Einheit gleichzeitig die Packmaschine betrieben und der Speicher befüllt werden kann. Der Speicher ersetzt also in diesem Fall eine Packmaschine. Obwohl die einzelnen Speicher keine allzu große Speicherkapazität aufweisen müssen, wird durch die Anzahl der Speicher letztendlich doch eine relativ große Gesamtkapazität geschaffen, die auf jeden Fall so groß sein sollte, daß sie ausreicht, Arbeitspausen zu überbrücken, in denen bekanntlich die Packmaschinen abgeschaltet werden. Auch ein solches Abschalten wird als eine "Störung" verstanden.

Das neue Verfahren weist eine ganze Reihe von Vorteilen auf. Zunächst einmal ist es wichtig, daß der größte Teil der Produktion der Herstellmaschine, also die ankommenden Gegenstände, direkt in den Packmaschinen verpackt werden, also ohne durch einen Speicher zu laufen, so daß die an sich unvermeidliche Verschmutzung der Speicher in Grenzen gehalten wird. Nur, wenn es nicht anders geht, wird gespeichert. Die Speicherung erfolgt immer so, daß zunächst der am wenigsten befüllte Speicher zum Speichern der Gegenstände herangezogen wird. Umgekehrt ist es beim Entleeren der Speicher. Hier wird immer zuerst der am vollsten befüllte Speicher entleert bzw. teilentleert. Durch die Zuordnung je eines Speichers zu einer Packmaschine sind die in einem einzelnen Speicher zu bewegenden Massen im Vergleich zu einem Zentralspeicher relativ klein, so daß diese Speicher ohne Änderung in der Geschwindigkeit der Förderung der Gegenstände betrieben werden können. Die verwendeten Weichen sind schließlich erheblich einfacher konstruiert als eine vergleichsweise komplizierte Beschickungsstation gemäß der DE-PS 28 31 323. Diese einfache Gestaltung der Weichen äußert sich in einer hohen Betriebssicherheit und einer äußerst geringen Störanfälligkeit der Weichen. Da die Speicher unabhängig von den Packmaschinen von der Verteilungsstraße her mit Gegenständen beschickt werden können, ersetzt gleichsam ein Speicher mit seiner zugehörigen Weiche eine Packmaschine mit dessen Weiche. Zumindest gilt dies im Sinne einer vollwertigen Aufnahmemöglichkeit. Durch diese grundsätzliche Anordnung ergibt sich eine große Anzahl der möglichen Verfahrensweisen. Es ergibt sich im Gegensatz zum Stand der Technik keine nennenswerte Schwierigkeit, wenn die Kapazität der aufnahmebereiten Packmaschinen die Kapazität der Herstellanlage unterschreitet. Selbst wenn zwei oder drei von vier Packmaschinen gestört sind, können die ankommenden Gegenstände problemlos aufgefangen werden. Es ist auch ohne Weiteres möglich, einen Speicher aus der Steuerung herauszunehmen, z. B. wenn an diesem Speicher eine Störung aufgetreten ist oder, wenn dieser Speicher gereinigt werden soll. Auf diese Art und Weise ist es möglich, die einzelnen Speicher in bestimmten Zeitabständen nacheinander zu reinigen und dann wiederum in die Produktion einzuschleusen, ohne daß die Arbeitsweise der Herstellmaschine unterbrochen werden muß. Die einzelnen Speicher besitzen eine geringere Masse als ein Zentralspeicher und können daher langsam betrieben werden, d. h. auch mit der Geschwindigkeit, mit der die zu verpackenden Gegenstände ankommen. Da an einer Einheit aus einer Packmaschine und einem Speicher gleichzeitig sowohl direkt verpackt als auch gespeichert werden kann, kann damit eine andere, z. B. nicht-aufnahmebereite Packmaschine ersetzt bzw. entlastet werden. Weiterhin ist vorteilhaft, daß sich die Möglichkeit ergibt, die Packmaschine schrittweise mit steigender Leistung anzufahren, also nach der Behebung einer Störung der Packmaschine die Packmaschine zunächst z. B. mit einem Drittel ihrer vorgegebenen Leistung zu betreiben und die restlichen 2/3 in den zugehörigen Speicher zu übernehmen, um dann eine Umschaltung auf 2/3 und nachfolgend auf 3/3 durchzuführen, was der Arbeitsweise einer schnell laufenden Packmaschine entgegenkommt.

Die Speicher werden nacheinander in Stufen, die einen Teil ihrer Aufnahmekapazität entsprechen, befüllt und/oder entleert. Die Speicher, die den einzelnen Packmaschinen zugeordnet sind, werden in ihrer Kapazität gleich groß gestaltet. Jeder Speicher wird in einzelne Stufen unterteilt, beispielsweise in vier Stufen und es wird eine Befüllungsüberwachung durchgeführt, indem z. B. festgestellt wird, daß ein erster Speicher mehr als 1/4 und ein zweiter Speicher mehr als 3/4 befüllt ist o. dgl. Übersteigen die ankommenden Gegenstände die Gesamtkapazität der aufnahmebereiten Packmaschinen, dann muß gespeichert werden. Dabei erfolgt die Abspeicherung jedoch völlig unabhängig davon, welche Packmaschine gestört ist. Es wird vielmehr in den Speicher eingespeichert, der im Vergleich zu dem anderen Speicher am wenigstens befüllt ist. Sind mehrere Speicher gleich wenig befüllt oder leer, dann wird eine willkürliche Reihenfolge, beispielsweise die Reihenfolge ihrer Anordnung entlang der Verteilungsstraße eingehalten. Umgekehrt wird beim Entleeren vorgegangen. Übersteigt die Kapazität der aufnahmebereiten Packmaschinen die Produktion aus der Herstellanlage um mehr als eine ganze Packmaschine, dann kann ein Speicher parallel zur Verarbeitung der Produktion entleert werden. Dies geschieht dann derart, daß der am meisten befüllte Speicher entleert wird. Diese Entleerung wie auch vorangehend die Befüllung wird jedoch nicht vollständig betrieben, also beispielsweise, bis dieser Speicher vollständig entleert ist, sondern es wird immer darauf geachtet, daß sich in allen Speichern ein möglichst gleichmäßig verteiltes Niveau von Gegenständen befindet, weil nicht vorauszusehen ist, an welcher der Packmaschinen, Weichen oder Speicher die nächste Störung auftreten wird.

Es ist durchaus möglich, einen oder mehrere Speicher gleichzeitig - auch mit ggf. unterschiedlichen Geschwindigkeiten - zu befüllen und zu entleeren. Ein solches Arbeitsverfahren ist beispielsweise dann sinnvoll, wenn die Herstellanlage bei der Herstellung eines komplizierten Produkts, also beispielsweise bei Schokolade mit ganzen Nüssen, oder mit einer komplizierten Füllung, mit reduzierter Leistung betrieben werden muß. Dann laufen die Bänder an der Verteilungsstraße auch mit entsprechend reduzierter Geschwindigkeit und bei direkter Einspeisung der Gegenstände in die Packmaschinen werden auch die Packmaschinen mit dieser reduzierten Geschwindigkeit betrieben, obwohl sie an sich für eine höhere Leistung ausgelegt sind. Ergibt sich während dieses Verfahrens die Notwendigkeit, einen Speicher zu entleeren, so kann die Entleerung des Speichers und die Verarbeitung in der zugehörigen Packmaschine mit unreduzierter Leistung, also vergleichsweise beschleunigt, erfolgen. Dabei kann es auftreten, daß keine aufnahmebereite Packmaschine zur Verfügung steht und trotzdem ein vielleicht weitgehend befüllter Speicher entleert werden soll. Dann besteht die Möglichkeit, die an sich in die Packmaschine direkt einzuspeisenden Gegenstände über den zugehörigen Speicher zu leiten, also mit reduzierter Leistung in den Speicher einzuspeichern, jedoch den gleichen Speicher mit der vollen Leistung, also erhöhter Geschwindigkeit, so, wie es die Packmaschine verträgt, zu entleeren. Durch die Differenz dieser beiden Arbeitsgeschwindigkeiten wird letztendlich auch der Speicher leerer.

Die Verpackungsanlage zur Durchführung des Verfahrens kennzeichnet sich dadurch, daß jeder Packmaschine je ein Speicher zur Zwischenspeicherung von Gegenständen zugeordnet ist, daß für jede Packmaschine eine zweite Weiche vorgesehen ist, und daß jeder Speicher jeweils über die zweite Weiche beschickbar und über das Austragsband entleerbar ist. Damit werden Einheiten aus je einer Packmaschine, einem Speicher, zwei unabhängigen Weichen und einem Austragsband zur Packmaschine sowie einem Speicherzuführband und einem Speicheraustragsband geschaffen. Es wird gleichsam im Bereich jeder Packmaschine eine Schleife gelegt, in die der Speicher über das Speicherzuführband angeschlossen ist, also einerseits befüllt werden, während andererseits der Speicher über das Speicheraustragsband und das Austragsband in die Packmaschine hinein entleert werden kann. Im Bereich jeder Einheit ist die Packmaschine und der Speicher weder dauerhaft in Reihe noch dauerhaft parallel geschaltet. Durch die Anordnung der beiden unabhängigen Weichen kann jedoch je nach Betriebsweise wahlweise eine Parallelschaltung oder eine Reihenschaltung herbeigeführt werden. Hierdurch erhöht sich die Anzahl der Möglichkeiten, in denen die Packmaschinen und die Speicher betrieben werden können, ganz erheblich, wobei davon ausgegangen wird, daß zu jeder Verteilungsstraße mindestens zwei, jedoch vorteilhaft drei bis fünf Einheiten, gehören. Die Ausbildung der Weichen wird durch ihre räumlich getrennte Anordnung voneinander im Bereich jeder Einheit relativ einfach und damit störunanfällig. Die Anlage gestattet es, die Gegenstände vorzugsweise direkt in die Packmaschine zu leiten, also ohne eine zwangsweise Durchführung durch die Speicher, wie dies im Stand der Technik bei all den Anlagen erforderlich ist, bei denen der oder die Speicher den Packmaschinen vorgeschaltet sind. Weiterhin kann die gesamte Speicherkapazität auf die Anzahl der einzelnen Speicher aufgeteilt werden, was nicht nur den Vorteil erbringt, daß die zu bewegenden Massen im einzelnen Speicher kleiner sind und somit die Speicher auch mit der Fördergeschwindigkeit der Gegenstände auf dem endlosen Förderer bzw. der Verteilungsstraße gehandhabt werden können. Es ist ergibt sich vielmehr der weitere Vorteil, daß mehrere Speicher gleichzeitig befüllt und/oder entleert werden können.

Entlang der Verteilungsstraße sind also mehrere Einheiten aus je einer Packmaschine und einem Speicher angeordnet; die Packmaschine jeder Einheit ist unabhängig voneinander über eine erste Weiche direkt und/oder über eine zweite Weiche und den Speicher indirekt mit den Gegenständen beschickbar. Jeder Speicher ersetzt damit praktisch für eine gewisse Zeit eine Packmaschine, falls er gebraucht wird. Ein Speicher kann ohne Weiteres, beispielsweise zu Reinigungszwecken, für eine bestimmte Zeit aus der Ansteuerung herausgenommen werden, so daß abzusehen ist, daß auch die Aufnahmekapazität der verbleibenden Speicher ausreicht, damit übliche Störfälle behoben werden können. Die Speicherkapazität insgesamt kann so ausgelegt werden, daß damit Arbeitspausen, in denen die Packmaschinen stillgesetzt werden, jedoch die Herstellmaschine weiterläuft, überbrückt werden können.

Jeder Speicher jeder Einheit ist von der zweiten Weiche über ein Speicherzuführband beschickbar und über ein Speicheraustragsband und das Austragsband zur Packmaschine hin entleerbar. Damit können die Speicher und die Packmaschinen unabhängig voneinander angesteuert werden. Es ist ohne Weiteres möglich, daß der der ersten Packmaschine zugeordnete Speicher beispielsweise die Gegenstände aufnimmt, die an sich der dritten Packmaschine zugeordnet wären.

In Förderrichtung der Verteilerstraße können in den einzelnen Einheiten die ersten Weichen vor den zweiten Weichen vorgesehen sein. Dies ist insofern vorteilhaft, als bei Meldung der Aufnahmebereitschaft einer Packmaschine sofort Gegenstände über die erste Weiche der Packmaschine direkt zugeführt werden können. Die direkte Zufuhr zur Packmaschine ist damit bevorzugt. Fällt umgekehrt eine Packmaschine aus, so kann die erste Reihe der nicht mehr abgenommenen Gegenstände auch noch von dem zugehörigen Speicher dieser ausgefallenen Packmaschine aufgenommen werden. An sich ist auch die umgekehrte Anordnung, also die Anordnung der zweiten Weichen vor den ersten Weichen, möglich.

Es ist eine Steuereinrichtung zum Erfassen der Aufnahmebereitschaft jeder Packmaschine und der Aufnahmebereitschaft und des Füllungsgrades jedes Speichers sowie zum Ansteuern der Weichen, der Speicher und der Bänder vorgesehen. Diese Steuereinrichtung überwacht und schaltet die einzelnen Elemente in möglichst zweckmäßiger Weise.

Die Packmaschinen und die Speicher können einzeln unabhängig voneinander abschaltbar sein, beispielsweise zu Reinigungszwecken oder für einen bewußten längeren Stillstand.

Die Anordnung und Ausbildung der Weichen kann in verschiedener Weise geschehen. Je nach Zweckmäßigkeit können beide Weichen nach oben oder nach unten verschwenkbar sein. Auch eine gemischte Bauweise ist ohne Weiteres denkbar. Auch können die Packmaschinen einerseits und die Speicher andererseits beide entweder auf der gleichen Seite der Verteilungsstraße oder auch gegenüber angeordnet sein. Wichtig ist an sich nur, darauf zu achten, daß jeder Speicher letztlich wieder Anschluß an das Austragsband findet, welches zu einer Packmaschine gehört.

Die Erfindung wird anhand bevorzugter Beispiele weiter beschrieben und erläutert. Es zeigen:
- Figur 1: eine schematische Darstellung der Verpackungsanlage in einer ersten Ausführungsform,
- Figur 2: eine schematische Darstellung der Verpackungsanlage in einer zweiten Ausführungsform,
- Figur 3: eine schematisierte Seitenansicht der Verpackungsanlage gemäß Figur 2,
- Figur 4: eine schematisierte Seitenansicht der Verpackungsanlage gemäß Figur 1,
- Figur 5: eine Draufsicht auf eine Übergabestelle zwischen einer Weiche und einem Austragsband und
- Figuren 6 bis 14: die Verpackungsanlage gemäß Figur 1 bei verschiedenen Betriebszuständen.

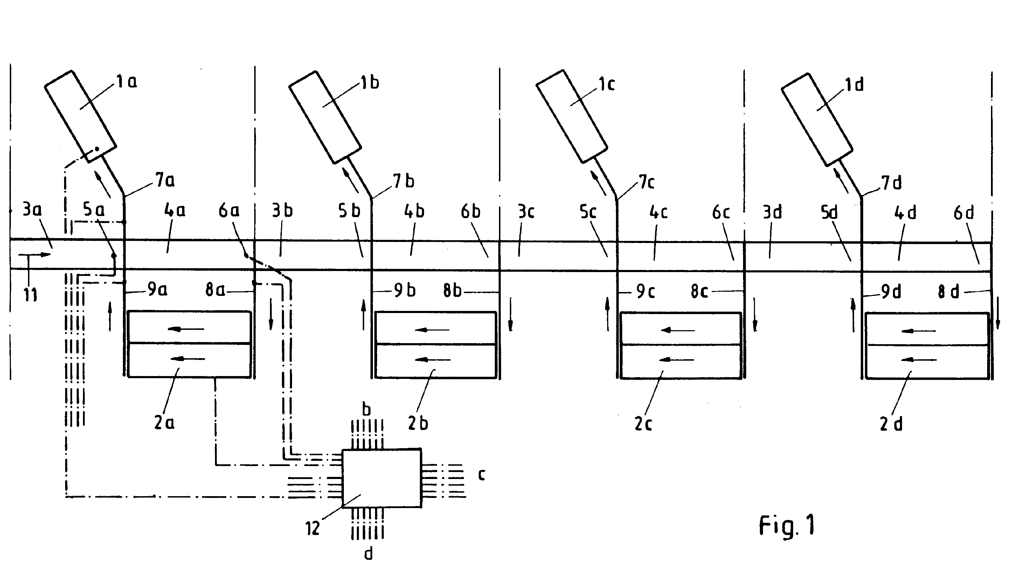

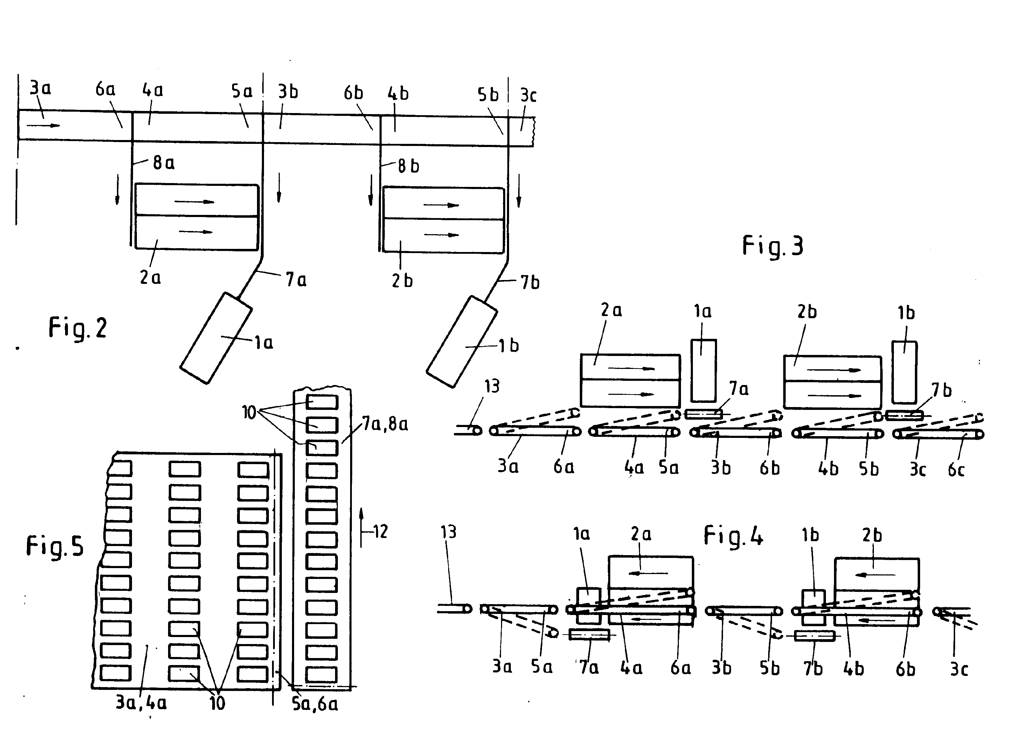

In Figur 1 sind in Draufsicht vier Packmaschinen 1a, 1b, 1c und 1d dargestellt. Jeder Packmaschine sind Speicher 2a, 2b, 2c und 2d zugeordnet. Es ist eine Verteilerstraße vorgesehen, die aus einer Mehrzahl aneinander anschließender Bänder besteht. Die zu verpackenden Gegenstände 10 (Figur 5) werden auf einem nicht dargestellten endlosen Förderer von der Herstellmaschine, die ebenfalls nicht dargestellt ist, herangebracht und gelangen gemäß Pfeil 11 (Figur 1) zunächst auf das Zuführband 3a und würden ohne eine Steuerung der Anlage dann auf das Weitergabeband 4a gelangen, dann wiederum auf das Zuführband 3b und das Weitergabeband 4b usw., so daß diese Gegenstände 10 die ganze aus den Bändern 3a bis 4d gebildete Verteilungsstraße in einer Richtung durchwandern würden. Jedes Zuführband 3a, 3b, 3c und 3d bildet entweder auch eine erste Weiche 5a, 5b, 5c, 5d oder besteht aus mehreren, hintereinandergeschalteten Teilbändern, so daß am Ende jedenfalls die erste Weiche 5a, 5b, 5c, 5d usw. gebildet ist. Ähnlich sind auch die Weitergabebänder 4 aufgebaut. Auch diese können entweder gleichzeitig eine zweite Weiche 6a, 6b, 6c, 6d usw. bilden oder eine solche zweite Weiche an ihrem Ende aufweisen. Von der Weiche 5a führt ein Austragsband 7a zu der ersten Packmaschine 1a. Diese Situation ist in Draufsicht in Figur 5 dargestellt. Es ist erkennbar, daß mit Hilfe der Weiche 5a die in Querreihen nebeneinanderliegend ankommenden Gegenstände 10 auf das Austragsband 7a übergeben werden, wobei das Austragsband 7a in Schritten weiterschaltet, so daß aus den Querreihen auf dem Austragsband 7a eine kontinuierliche Reihe in Richtung des Pfeils 12 gebildet wird. Figur 4 läßt erkennen, wie das Zuführband 3a mit der Weiche 5a in der gestrichelt dargestellten Stellung Anschluß an das Austragsband 7a hat, welches zur Packmaschine 1a führt. Ist die Weiche 5a dagegen nicht abgesenkt, dann werden die Querreihen der Gegenstände 10 auf das Weitergabeband 4a überführt und gelangen nun in den Bereich der zweiten Weiche 6a. Bei nicht-betätigter Weiche 6a gelangen die Gegenstände auf das Zuführband 3b der nächsten Einheit b. Man erkennt bereits jetzt, daß entlang der Verteilungsstraße mehrere gleiche Einheiten a, b, c, d usw. vorgesehen und angeordnet sind. Alle Einheiten sind prinzipiell gleich ausgebildet und die Einzelbeschreibung gilt für jede dieser Einheiten. Wird die Weiche 6a dagegen aktiviert, d. h. in ihre in Figur 4 dargestellte gestrichelte Stellung überführt, wobei diese Stellung je nach Ausbildung der Anlage entweder oberhalb der Förderebene der Verteilungsstraße oder auch unterhalb derselben liegen kann, wie dies am Beispiel der Weiche 5a Figur 4 dargestellt wurde, so gelangen die Gegenstände auf ein Speicherzuführband 8a (Figuren 1 und 5) und werden damit in den Speicher 2a eingespeichert. Für eine Entleerung des Speichers 2a ist ein Speicheraustragsband 9a vorgesehen, welches direkten Anschluß ohne Richtungsänderung an das Austragsband 7a hat, so daß eine Entleerung von Gegenständen 10 aus dem Speicher 2a nur über das Speicheraustragsband 9a und das Austragsband 7a zur Packmaschine 1a erfolgen kann. Diese grundsätzliche Anordnung und Verschaltung ist zwischen den Packmaschinen und den Speichern im Bereich jeder Einheit a, b, c, d in gleicher Weise ausgebildet. Es versteht sich, daß hier ein Beispiel für vier Einheiten a, b, c, d dargestellt ist. Die kleinste sinnvolle Einheit wären zwei Einheiten, während ansonsten die Anzahl der Einheiten beliebig vergrößerbar ist, je nach der Herstellungskapazität der Herstellungsmaschine. Die verschiedenen, in Figur 1 dargestellten Pfeile zeigen die verschiedenen Bewegungsmöglichkeiten der Gegenstände 10 auf, ohne daß dies bedeutet, daß sämtliche Packmaschinen 1a, 1b, 1c, 1d und sämtliche Speicher 2a, 2b, 2c und 2d gleichzeitig arbeiten müssen. Es wird hier immer nur eine Auswahl an Elementen gleichzeitig in Tätigkeit sein, wie dies nachfolgend noch erläutert wird.

Es ist eine Steuereinrichtung 12 gemeinsam für sämtliche Einheiten a, b, c, d vorgesehen. Von der Steuereinrichtung 11 führt ein Bündel elektrischer Leitungen zur Überwachung von Fühlern bzw. Überwachungsorganen (nicht dargestellt) an die einzelnen Aggregate, so daß einerseits die Überwachung und andererseits die Steuerung der jeweiligen Antriebe der Elemente erfolgen kann. Sämtliche elektrischen Leitungen sind strichpunktiert angedeutet. So führt eine erste elektrische Leitung von der Steuereinrichtung 12 zu der Packmaschine 1a. Über diese Leitung wird die Aufnahmebereitschaft der Packmaschine 1a an die Steuereinrichtung 12 signalisiert und andererseits die Packmaschine von der Steuereinrichtung 12 ein- und ausgeschaltet. Eine zweite Leitung führt zu dem Austragsband 7a. Eine dritte Leitung zu der Weiche 5a. Weitere Leitungen führen zu der zweiten Weiche 6a, zum Speicherzuführband 8a, zum Speicher 2a und zum Speicheraustragsband 9a. Auf diese Art und Weise wird auch der Füllungsstand des Speichers 2a überwacht und an die Steuereinrichtung 12 gemeldet und dort gespeichert, so daß die Steuereinrichtung 12 jederzeit erkennen kann, ob und inwieweit der betreffende Speicher mit Gegenständen 10 befüllt ist oder nicht. Die Speicher 2a, 2b, 2c, 2d sind in gleichmäßige Stufen eingeteilt, beispielsweise jeder Speicher in vier Stufen, so daß bei Erreichen der ersten Stufe der Speicher zu 25 % befüllt ist. Analoges gilt für die übrigen Einheiten b, c, d. Die entsprechenden Leitungen, die auch von der gemeinsamen Steuereinrichtung 12 ausgehen, sind hier nur in ihrem Beginn angedeutet, um die Zeichnung übersichtlich zu halten.

Während bei der Ausführungsform der Figur 1 im Bereich jeder Einheit a, b, c, d die erste Weiche 5a immer vor der zweiten Weiche 6a angeordnet ist, ist diese Anordnung bei der Verpackungsanlage gemäß Figur 2 umgekehrt getroffen. Hier geht in jeder Einheit der ersten Weiche 5a die zweite Weiche 6a voraus oder anders gesagt, die zweite Weiche 6a befindet sich hier am Ende des Zuführbands 3a, so daß logischerweise auch das Speicheraustragsband 8a an diese Weiche 6a Anschluß hat, während umgekehrt das Austragsband 7a, welches zur Packmaschine 1a führt, von der Weiche 5a abzweigt. Im Vergleich zur Figur 1, bei der die Packmaschinen 1a bis 1d auf der einen Seite der Bänder 3a bis 4d und die Speicher 2a bis 2d auf der anderen Seite angeordnet waren, zeigt Figur 2, daß es auch möglich ist, Packmaschinen 1 und Speicher 2 auf der gleichen Seite der Verteilungsstraße anzuordnen. In Figur 1 sind nur die beiden Einheiten a und b und der Beginn der Einheit c dargestellt. Man kann sich ohne Weiteres vorstellen, daß auch hier mehrere Einheiten hintereinandergeschaltet sind.

Die Figur 3 ist der Figur 2 zugeordnet, während die Figur 4 die Seitenansicht der Anlage oder eines Teils der Anlage gemäß Figur 1 zeigt. Man erkennt, daß die Weichen 5a, 5b, 6a, 6b usw. entweder alle nach oben oder unten in ihre betätigte Stellung überführbar sind oder aber auch eine gemischte Bauweise möglich ist (Figur 4). Prinzipiell ist dies an sich gleichgültig. Wichtig ist nur, daß jeweils über die erste Weiche 5 die Packmaschine 1 direkt über das Austragsband 7 erreichbar ist, während andererseits über die zweite Weiche 6 das Speicherzuführband 8 und damit der Speicher 2 Anschluß hat, dessen Speicheraustragsband 9 dann wiederum Anschluß an das Austragsband 7 hat. Bei der Ausführungsform gemäß Figur 2 kann ein gesondertes Speicheraustragsband 9a entfallen, wenn das Austragsband 7, welches an die erste Weiche 5a anschließt, auch am Ausgang des Speichers 2 vorbeigeführt ist.

Es ist erkennbar, daß bei der Übergabe der Gegenstände 10 von einem Zuführband 3 auf ein Weitergabeband 4 oder umgekehrt keine schiebende Relativbewegung zwischen den Gegenständen 10 und dem jeweiligen Band stattfindet. Die verschiedenen Bänder schließen hier in einer Richtung aneinander an und sind alle angetrieben, und zwar entsprechend dem Antrieb eines endlosen Förderers 13 (Figuren 3 und 4), auf dem die Gegenstände 10 in Querreihen nebeneinanderliegend aus der Herstellungsmaschine an die Verpackungsstraße herangebracht werden, wo die Übergabe auf das erste Zuführband 3a erfolgt. Bei der Übergabe der Gegenstände 10 auf ein Austragsband 7, ein Speicherzuführband 8 oder ein Speicheraustragsband 9 findet eine Richtungsumkehr statt, da die betreffenden Bänder hier rechtwinklig aneinander anschließen (vgl. Figur 5). Dabei müssen die Gegenstände 10 um eine gewisse Strecke auf den Bändern geschoben werden. Es versteht sich, daß hierfür entsprechende Elemente vorgesehen sind, die der Übersichtlichkeit halber nicht dargestellt sind. Jede solche schiebende Bewegung hat jedoch den Nachteil, daß die Gefahr besteht, daß durch die dabei auftretende Reibung Teile der Gegenstände abbrechen, die dann zu einer Verschmutzung oder einer sonstigen Beeinträchtigung führen. Deshalb ist es angebracht, eine solche schiebende Bewegung, die, wie ersichtlich, beim Speicher mehrfach auftritt, möglichst nur einmal auftreten zu lassen, wie dies beim direkten Zuführen der Gegenstände 10 zu der Packmaschine 1 der Fall ist. Auch beim Einbringen der Gegenstände 10 in die Speicher 2, die üblicherweise mit Gondeln, Aufnahmeblechen o. dgl. ausgestattet sind, ist eine solche schiebende Bewegung unabdingbar. Hierdurch verschmutzen die Speicher und es empfiehlt sich daher, möglichst nur dann zu speichern, wenn dies unbedingt erforderlich ist, d. h. die Aufnahmekapazität der Packmaschine in der jeweiligen Betriebsweise nicht ausreicht bzw. die Herstellkapazität der Herstellanlage unterschreitet.

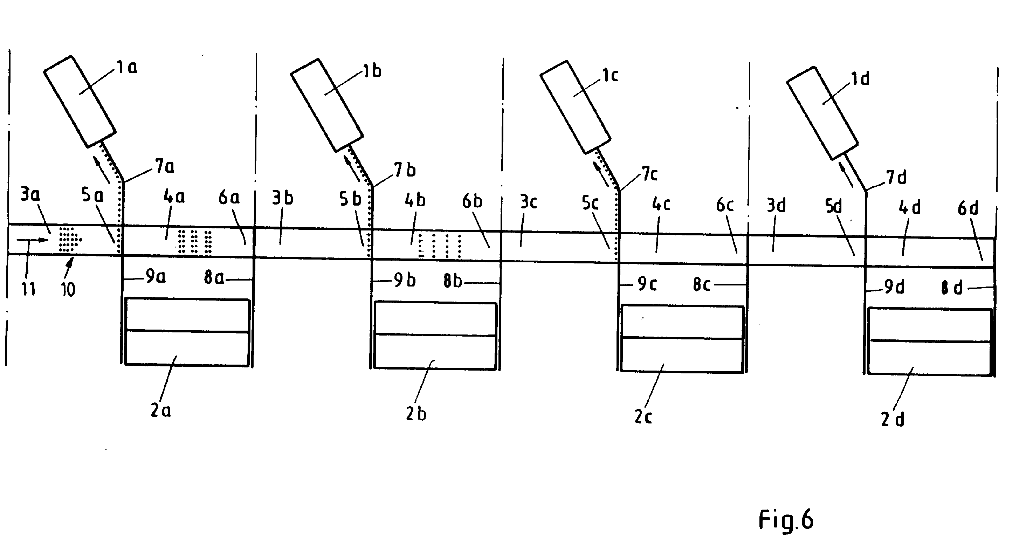

Die Arbeitsweise der Verpackungsanlage gemäß den Figuren 1 und 4 sowie deren Steuerung wird anhand der Figuren 6 bis 14 weiter erläutert:
In Figur 6 ist die Situation zu Beginn einer Arbeitsperiode dargestellt. Sämtliche Speicher 2 sind leer und sämtliche Packmaschinen 1 sind aufnahmebereit, d. h. ordnungsgemäß mit Verpackungsmaterial ausgestattet sowie funktionsbereit. Dies wird der Steuereinrichtung 12 angezeigt. Die Gegenstände 10 laufen somit von der Herstellungsmaschine über den Endlosförderer 13 auf das erste Zuführband 3a. Sie sind dort durch die Punktanordnung verdeutlicht, so daß erkennbar ist, wie die Gegenstände 10 in Querreihen nebeneinanderliegend gleichabständig von Gegenstand zu Gegenstand und gleichabständig von Querreihe zu Querreihe ankommen. Die Steuereinrichtung schaltet nun die Packmaschine 1a auf Anlauf, so daß zunächst die Weiche 5a aktiviert wird, so daß eine Reihe der Gegenstände auf das Austragsband 7a übergesetzt wird, während die beiden nachfolgenden Querreihen, nachdem das Zuführband 3a wiederum Anschluß an das Weitergabeband 4a gefunden hat, an das Weitergabeband 4a abgegeben werden. Auf diese Art und Weise wird nun jede dritte ankommende Querreihe auf das Austragsband 7a übergeben, welches sich schrittweise bewegt und damit letztlich kontinuierlich Gegenstände 10 der Packmaschine 1a zuführt, wo diese Gegenstände nacheinander verpackt werden. Auf dem Weitergabeband 4a fehlt jede dritte Querreihe, was anhand der Punktdarstellung ersichtlich ist. Im Bereich der zweiten Einheit wird die zweite Packmaschine 1b in entsprechender Weise eingeschaltet und tätig, so daß auf dem Weitergabeband 4b nur noch jeweils die dritten Querreihen übrig bleiben, die dann auf die gleiche Weise der Packmaschine 1c zugeführt werden. Jede der Packmaschinen 1a, 1b, 1c erhält somit ein Drittel der Gegenstände 10, so daß für die Reserve-Packmaschine 1d nichts übrig bleibt. Auf diese Art und Weise werden sämtliche Gegenstände 10 direkt den Packmaschinen 1a, 1b, 1c zugeleitet, also ohne jegliche Zwischenspeicherung und ohne den Umweg über die Speicher 2. Beispielsweise können durchaus 18 Artikel in der Reihe quer nebeneinanderliegend gehandhabt werden bei einer kontinuierlichen Transportleistung auf der Verteilungsstraße von 120 Reihen/min. Jede Packmaschine 1a, 1b, 1c verpackt damit 40 Reihen/min. Es ist ohne Weiteres zu übersehen, daß beim Ausfall einer Packmaschine 1a, 1b oder 1c die entsprechende Drittelmenge der Gegenstände 10 zu der aufnahmebereiten Packmaschine 1d umgeleitet werden kann, und zwar ohne daß eine Speicherung der Gegenstände in den Speichern 2 in Anspruch genommen wird. Insoweit kann beispielsweise der notwendige Rollenwechsel für das Hüllmaterial an einer Packmaschine durchgeführt werden oder zerbrochene Gegenstände aus der betreffenden Packmaschine herausgenommen und die Packmaschine gesäubert werden.

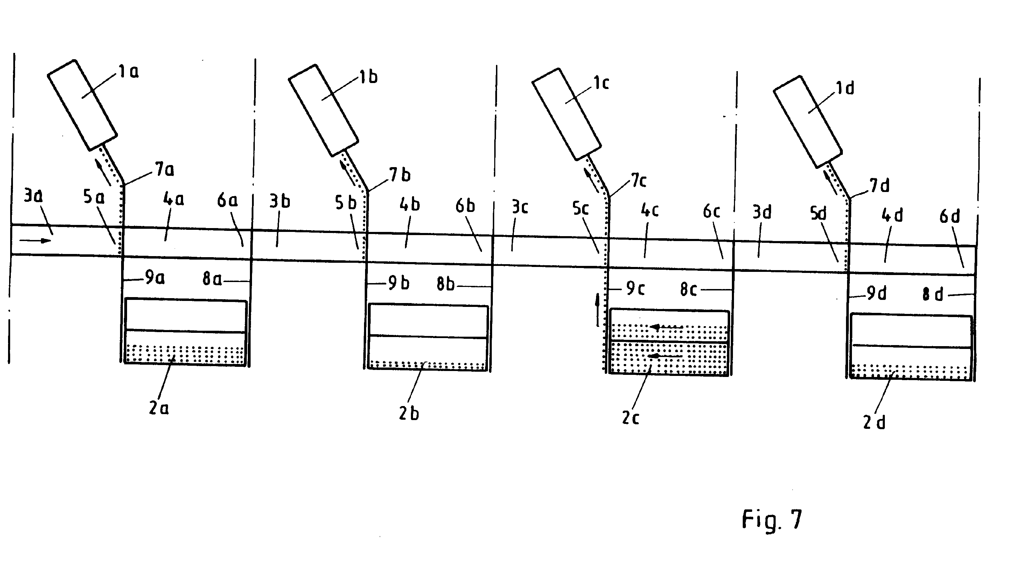

Es ist jedoch vorstellbar, daß es sich nicht vermeiden läßt, daß Betriebszustände eintreten, bei denen mehr als eine Packmaschine gleichzeitig nicht aufnahmebereit sind. In diesem Fall muß eine Speicherung der Gegenstände in den Speichern 2 erfolgen. Figur 7 zeigt, wie auf diese Art und Weise die Speicher 2a, 2b, 2c und 2d unterschiedlich angefüllt sein können, wobei der Speicher 2c am meisten befüllt sein möge. Figur 7 zeigt dann die Situation, in welcher sämtliche Packmaschinen 1a bis 1d aufnahmebereit sind. Sämtliche Packmaschinen 1a bis 1d arbeiten, und zwar wird die von der Herstellmaschine herangeführte Produktion der Gegenstände 10 auf die Packmaschinen 1a, 1b und 1d direkt verteilt, während der am meisten befüllte Speicher 2c gleichzeitig entleert wird, indem die Gegenstände aus ihm mit Hilfe des Speicheraustragsbands 9c und des daran angeschlossenen Austragsbands 7c der Packmaschine 1c zugeführt werden. Diese Steuerung übernimmt die Steuereinrichtung 12. Dabei kann durchaus die Situation eintreten, daß der Inhalt des Speichers 2c soweit entleert wird, daß die in ihm noch verbleibenden Gegenstände 10 den Speicher geringer befüllen als die im Speicher 2a abgespeicherten Gegenstände. Wenn dieser Zustand eintritt, werden die Packmaschinen 1a und 1c umgeschaltet, d. h. die direkte Produktion, die vorher in der Packmaschine 1a verpackt wurde, wird der Packmaschine 1c zugeführt und der Speicher 2a wird über die Packmaschine 1a entleert. Die Speicher sind also hinsichtlich ihres Befüllungsgrades in verschiedene Stufen eingeteilt und es findet immer ein Abgleich zwischen den einzelnen Stufen statt, so daß sämtliche Speicher möglichst gleichmäßig befüllt und auch möglichst gleichmäßig entleert werden. Es versteht sich, daß das am Beispiel der Einheit c dargestellte Verhalten natürlich auf für jede andere Einheit a, b, d eintreten kann, wobei Analoges gilt.

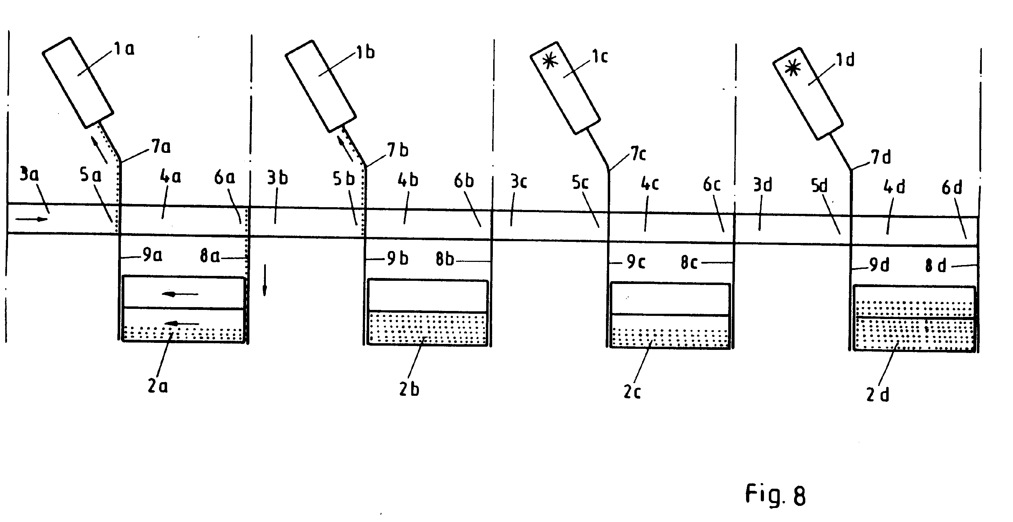

Figur 8 zeigt eine Betriebsweise, die dadurch entstehen möge, daß die beiden Packmaschinen 1c und 1d gestört sind, was durch einen Stern verdeutlicht ist. Diese beiden Packmaschinen sind daher nicht aufnahmebereit, so daß die Produktion der Gegenstände 10 zu je einem Drittel direkt in den Packmaschinen 1a und 1b verpackt werden kann. Jedoch sind sämtliche Speicher 2a bis 2d ebenfalls aufnahmebereit, wobei lediglich, wie angedeutet, der Speicher 2a derjenige ist, der zu dem betreffenden Zeitpunkt den geringsten Befüllungsgrad aufweist. Insoweit wird der Speicher 2a von der Steuereinrichtung 12 ausgewählt und das 3. Drittel der Produktion wird über die zweite Weiche 6a und das Speicherzuführband 8a in den Speicher 2a eingelagert. Das Speicheraustragsband 9a steht still. Der Speicher 2a wird nun bis zur Erreichung der Befüllung der nächsten Stufe, also beispielsweise bis zu seiner Befüllung zu 50% befüllt. In diesem Moment erfolgt ein Abgleich unter den Speichern und die Steuereinheit stellt fest, daß der Speicher 2c derjenige mit dem niedrigsten Füllungsgrad ist. In diesem Moment wird von dem Speicher 2a auf den Speicher 2c umgeschaltet, immer unter der Voraussetzung, daß die Packmaschinen 1c und 1d weiterhin gestört sind.

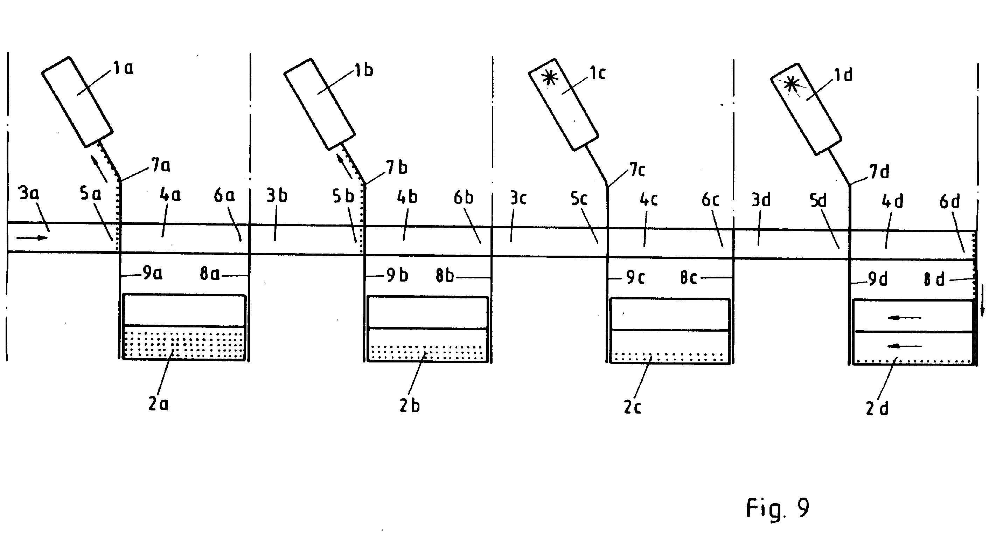

Figur 9 verdeutlicht eine solche Situation, bei der die Packmaschinen 1c und 1d gestört sind. Je 1/3 der normalen Produktion wird in den Packmaschinen 1a und 1b abgenommen. Das 3. Drittel wird in den am wenigsten befüllten Speicher 2d überführt. Man erkennt hier, daß die Steuereinrichtung 12 selbsttätig die Verteilung der Reihen vornimmt, und zwar auch Umschaltungen durchführt, wenn keine neuen Betriebsstörungen hinzutreten. Selbstverständlich werden auch sofort Umschaltungen vorgenommen, falls eine vorher gestörte Packmaschine wiederum Aufnahmebereitschaft signalisiert. Das direkte Verpacken, also ohne Zwischenspeichern, geht in jedem Fall vor. Jedenfalls ist eine solche Betriebsweise möglich.

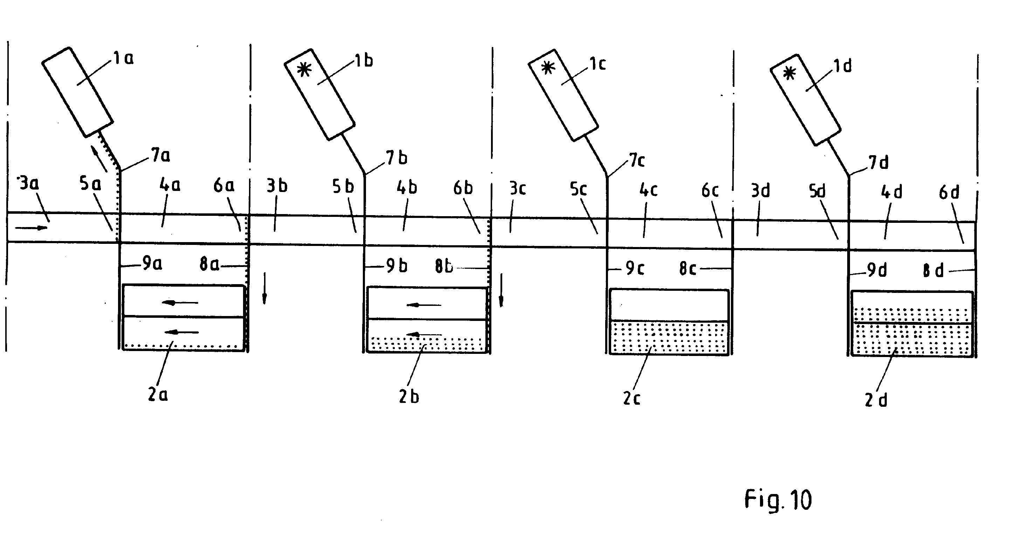

Figur 10 zeigt eine Situation, bei der die drei Packmaschinen 1b, 1c und 1d gestört sind und lediglich die Packmaschine 1a aufnahmebereit ist. Bei einem solchen Störfall ergeben sich bei den Verpackungsanlagen aus dem Stand der Technik bereits so gravierende Schwierigkeiten und Nachteile, daß die Herstellmaschine abgeschaltet werden muß. Bei der vorliegenden Erfindung ist dies jedoch nicht der Fall, wie leicht übersehen werden kann. Figur 10 verdeutlicht, daß 1/3 der normalen Produktion von der Packmaschine 1a aufgenommen wird. 2/3 der Produktion müssen gespeichert werden, wozu die Steuereinrichtung 12 die beiden Speicher auswählt, die am wenigsten befüllt sind. Dies sind im vorliegenden Fall die Speicher 2a und 2b. Sobald der Speicher 2b hinsichtlich der betreffenden Stufe mehr Gegenstände 10 aufnimmt als der Speicher 2c, wird die Steuereinrichtung den Speicher 2b abschalten und den Speicher 2c hinzunehmen.

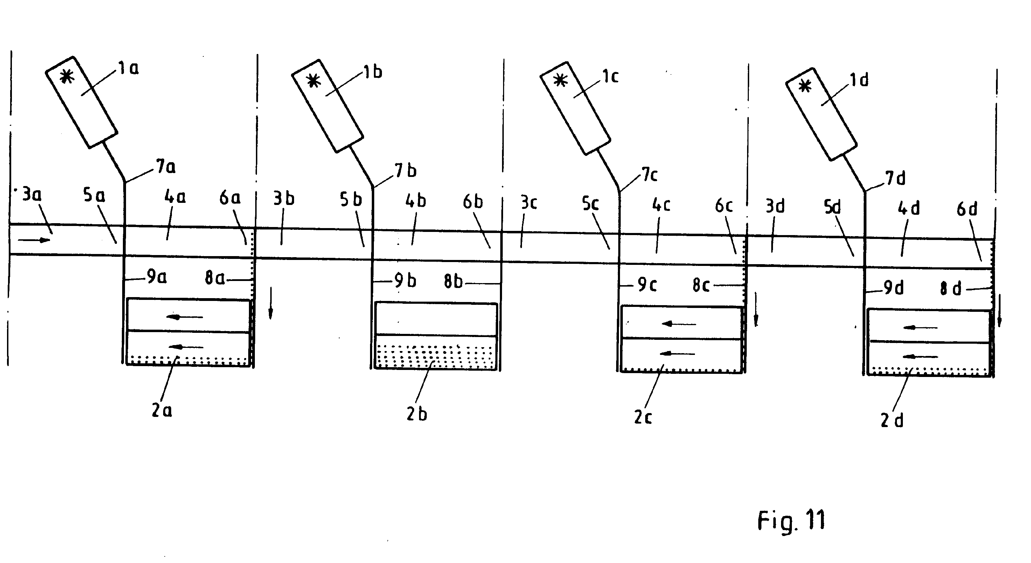

Figur 11 zeigt den Fall, wenn sämtliche Packmaschinen 1a bis 1d gestört sind. Dies entspricht auch dem normalen Pausenfall. Während die Herstellmaschine auch in der Pause weiterläuft, müssen die Packmaschinen 1a bis 1d in der Pause, also ohne Aufsicht, stillgesetzt werden. In diesem Fall wird die laufende Produktion auf die Speicher 2a, 2c und 2d aufgeteilt, nämlich die Speicher, die vergleichsweise am wenigsten befüllt sind. Man erkennt anhand des zuvor aufgezeigten Ausführungsbeispiels, daß jeder Speicher auch hier 40 Reihen/min aufnimmt, also nur mit der Geschwindigkeit betrieben werden muß, wie es auch der Geschwindigkeit auf der Verteilerstraße entspricht.

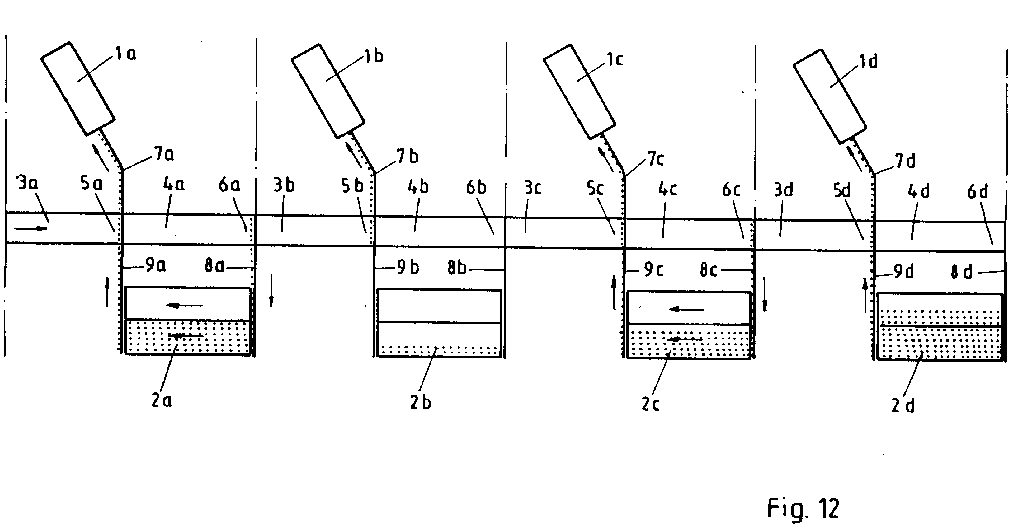

Figur 12 verdeutlicht die Arbeitssituation nach einer Pause. Es sei zugleich angenommen, daß für diesen Fall ein schwierig herzustellendes Produkt gefertigt wird, so daß die Herstellmaschine langsamer läuft. Es mögen hier anstelle der zuvor beschriebenen 120 Reihen nur 100 Reihen/min anfallen. An sich sind aber die Packmaschinen 1a bis 1d durchaus in der Lage, 40 Reihen/min aufzunehmen und zu verpacken. In einem solchen Fall wird 1/3 der normalen Produktion, also 33 1/3 Reihen/min, auf direktem Weg in die Packmaschine 1b überführt. Das 2. Drittel der normalen Produktion wird mit einer Geschwindigkeit von 33 1/3 Reihen/min in den Speicher 2a eingespeichert. Gleiches gilt für das 3. Drittel der normalen Produktion in den Speicher 2c. Gleichzeitig werden die Gegenstände 10 aus den Speichern 2a, 2c und 2d jeweils den zugehörigen Packmaschinen 1a, 1c, 1d zugeleitet, und zwar mit der erhöhten Geschwindigkeit, für die die Packmaschinen ausgelegt sind, nämlich 40 Reihen/min. Man erkennt, daß durch diese Betriebsweise, nämlich dem Einspeichern von 33 1/3 Reihen/min in einen Speicher und dem Herausholen mit einer größeren Geschwindigkeit, also beispielsweise 40 Reihen/min, die Inhalte der Speicher 2a, 2c und 2d abgearbeitet werden, so daß in den Speichern Raum geschaffen wird für neue Betriebsstörungen und Unterbrechungen. Bleiben diese aus, so wird man letztlich schrittweise auf die direkte Verpackung umschalten, wie dies anhand von Figur 6 erkennbar ist. Obwohl die Speicher in all diesen Beispielen nur zweigeteilt, also in zwei Stufen befüllbar, gezeichnet sind, kann natürlich jede beliebige Unterteilung erfolgen. Schon eine Unterteilung in 4/4, also in vier Stufen pro Speicher, ist durchaus sinnvoll und ausreichend.

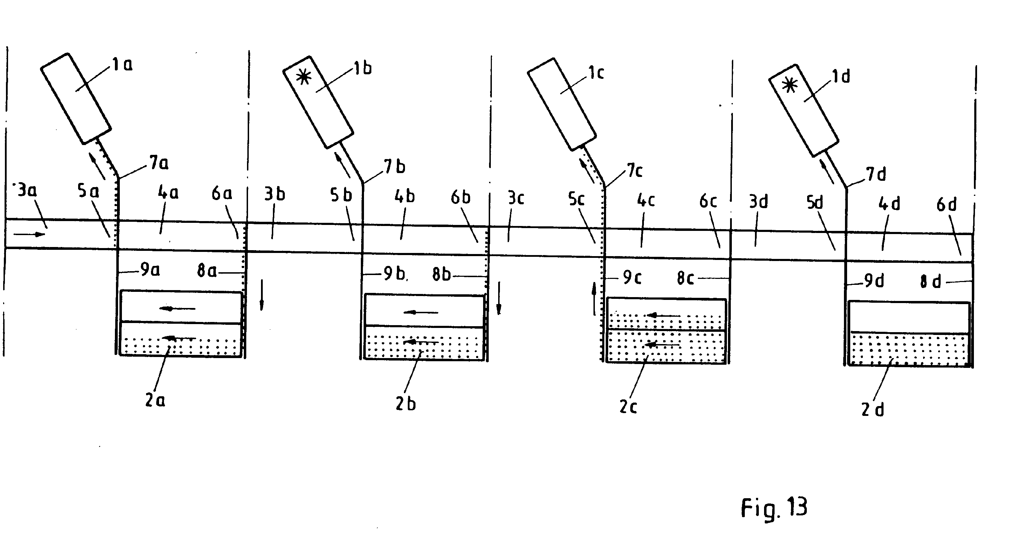

Figur 13 zeigt einen weiteren Betriebszustand bei reduzierter Herstelleistung von z. B. 100 Reihen/min. Die Packmaschinen 1b und 1c mögen gestört sein. Die normale Produktion wird zu je 1/3 auf die Packmaschine 1a und die Speicher 2a und 2b aufgeteilt. Die Geschwindigkeit beträgt hier an diesen drei Stationen 33 1/3 Reihen/min. Der Speicher 2c ist am meisten gefüllt und wird deshalb mit erhöhter Geschwindigkeit, nämlich 40 Reihen/min entleert, indem die Gegenstände in der Packmaschine 1c verpackt werden.

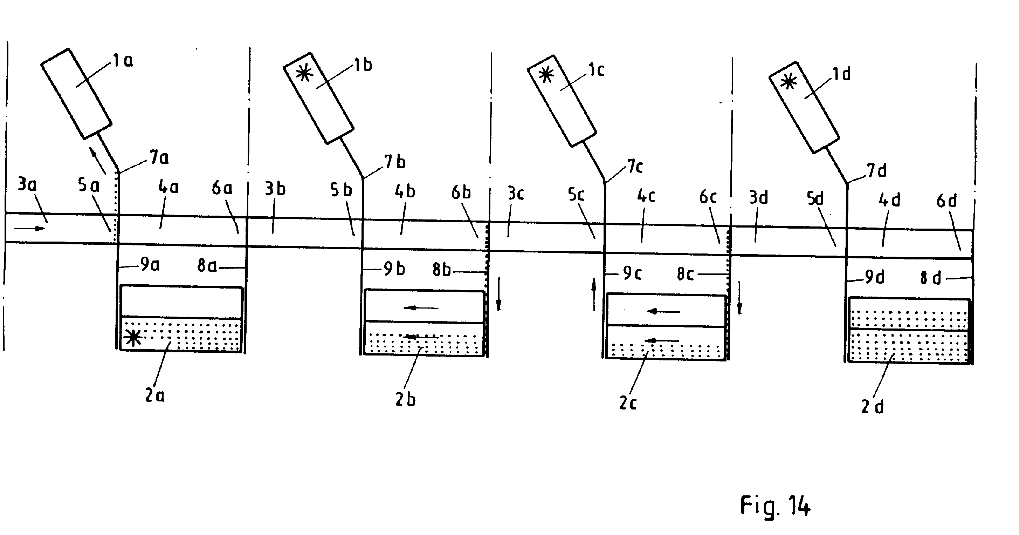

Figur 14 zeigt schließlich einen weiteren Störfall. Die Packmaschinen 1b, 1c und 1d mögen gestört bzw. nicht aufnahmebereit sein. 1/3 der Produktion wird direkt in der Packmaschine 1a verpackt. Die beiden anderen Drittel werden in die am wenigsten befüllten Speicher 8b und 8c eingelagert. Auch der Speicher 2a möge gestört sein, indem dort entweder eine Störung behoben werden muß oder eine routinemäßige Reinigung dieses Speichers 2a erfolgen soll. Dementsprechend ist der Speicher 2a aus der Verfügbarkeit herausgenommen und die Steuereinrichtung 12 kann nur die Speicher 2b, 2c und 2d miteinander vergleichen. Nachdem die Reinigung des Speichers 2a vollzogen worden ist, wird hier wieder Aufnahmebereitschaft signalisiert, wobei ein anderer Speicher gesäubert werden kann usw.

## Patentansprüche

1. Verfahren zum Überführen von auf einem endlosen Förderer in Querreihen kontinuierlich ankommenden Gegenständen (10), insbesondere Süßwarenteilen, wie Schokoladetafeln, Riegeln, Pralinen usw., in mehrere Packmaschinen (1), wobei die Gegenstände (10) reihenweise über eine erste Weiche (5) entweder der vorangehenden Packmaschine oder der nachfolgenden Packmaschine zugeführt, vor jeder Packmaschine auf einem Austragsband (7) zu einer Reihe zusammengefaßt und in den Packmaschinen (1) verpackt werden, dadurch gekennzeichnet, daß die Gegenstände (10) bei Bedarf reihenweise im Bereich einer oder mehrerer gestörter oder ungestörter Packmaschinen (1) über je eine zweite Weiche (6) unabhängig von der ersten Weiche (5) je einem Speicher (2) zugeführt und gespeichert werden, und daß die Speicher (2) nacheinander bei Überkapazität an aufnahmebereiten Packmaschinen (1) entleert werden.

2. Verfahren nach Anspruch 1, dadurch gekennzeichnet, daß die Speicher (2) nacheinander in Stufen, die einem Teil ihrer Aufnahmekapazität entsprechen, befüllt und/oder entleert werden.

3. Verfahren nach Anspruch 1 oder 2, dadurch gekennzeichnet, daß ein oder mehrere Speicher (2) gleichzeitig - auch mit ggf. unterschiedlichen Geschwindigkeiten - befüllt und entleert werden.

4. Verpackungsanlage zur Durchführung des Verfahrens nach Anspruch 1 bis 3, mit mehreren, entlang einer Verteilungsstraße angeordneten Packmaschinen (1), denen jeweils die Gegenstände (10) in Richtung der Querreihen einzeln hintereinander über je ein Austragsband (7) zugeführt und dort verpackt werden, wobei für jede Packmaschine eine Beschickungsstation mit einem Zuführband (3) und einem Weitergabeband (4) sowie einer zwischen Zuführband und Weitergabeband gebildeten, zu dem jeweiligen Austragsband (7) führenden Weiche (5) vorgesehen ist, dadurch gekennzeichnet, daß jeder Packmaschine (1) je ein Speicher (2) zur Zwischenspeicherung von Gegenständen (10) zugeordnet ist, daß für jede Packmaschine (1) eine zweite Weiche (6) vorgesehen ist, und daß jeder Speicher (2) jeweils über die zweite Weiche (6) beschickbar und über das Austragsband (7) entleerbar ist.

5. Verpackungsanlage nach Anspruch 4, dadurch gekennzeichnet, daß entlang der Verteilungsstraße mehrere Einheiten (a, b, c usw.) aus je einer Packmaschine (1a, 1b, 1c usw.) und einem Speicher (2a, 2b, 2c usw.) angeordnet sind, und daß die Packmaschine jeder Einheit unabhängig voneinander über eine erste Weiche (5a, 5b usw.) direkt und/oder über eine zweite Weiche (6a, 6b usw.) über den Speicher (2a, 2b usw.) indirekt mit den Gegenständen beschickbar ist.

6. Verpackungsanlage nach Anspruch 4 und 5, dadurch gekennzeichnet, daß jeder Speicher (2) jeder Einheit (a, b usw.) von der zweiten Weiche (6) über ein Speicherzuführband (8) beschickbar und über ein Speicheraustragsband (9) und das Austragsband (7) zur Packmaschine (1) hin entleerbar ist.

7. Verpackungsanlage nach Anspruch 4 bis 6, dadurch gekennzeichnet, daß in Förderrichtung der Verteilungsstraße in den einzelnen Einheiten (a, b, c usw.) die ersten Weichen (5) vor den zweiten Weichen (6) vorgesehen sind.

8. Verpackungsanlage nach einem oder mehreren der Ansprüche 4 bis 6, dadurch gekennzeichnet, daß eine Steuereinrichtung (12) zum Erfassen der Aufnahmebereitschaft jeder Packmaschine und der Aufnahmebereitschaft und des Füllungsgrads jedes Speichers (2) sowie zum Ansteuern der Weichen (5, 6), der Speicher (2) und der Bänder (7, 8, 9) vorgesehen ist.

9. Verpackungsanlage nach einem der Ansprüche 4 bis 6, dadurch gekennzeichnet, daß die Packmaschinen (1) und die Speicher (2) einzeln unabhängig voneinander abschaltbar sind.

10. Verpackungsanlage nach einem der Ansprüche 4 bis 6, dadurch gekennzeichnet, daß die beiden Weichen (5, 6) nach oben oder nach unten verschwenkbar sind.

## Claims

1. Method for transferring articles (10), in particular parts of confectionery such as cakes of chocolate, bars, pralines and so forth, arriving continuously in transverse rows on an endless conveyor into several packing machines (1), wherein the articles (10) are fed row by row by way of a first shunting switch (5) either to the preceding packing machine or to the following packing machine, are combined into one row on an output belt (7) in front of each packing machine and packed in the packing machines (1), characterised thereby, that the articles (10) are, in the case of need, in the region of one or more disturbed or undisturbed packing machines (1) fed row by row by way of a second shunting switch (6) and independently of the first shunting switch (5) to a respective storage device (2) and stored therein and that in the case of over-capacity the storage devices (2) are emptied one after the other in the case of packing machines (1) ready for reception.

2. Method according to claim 1, characterised thereby, that the storage devices (2) are filled and/or emptied one after the other in stages which correspond to a part of their reception capacity.

3. Method according to claim 1 or 2, characterised thereby, that one or more storage devices (2) are filled and emptied at the same time, in a given case also at different speeds.

4. Packing plant for the performance of the method according to claim 1 to 3 with several packing machines (1), which are arranged along a distribution line and to which the articles (10) are fed in the direction of the transverse rows individually one after the other each time by way of a respective output belt (7) and packed there, wherein a charging station with a feed belt (3) and a transfer belt (4) as well as a shunting switch (5), which is formed between the feed belt and the transfer belt and which leads to the respective output belt (7), is provided for each packing machine, characterised thereby, the articles (10) is associated with each packing machine (1), that a second shunting switch (6) is provided for each packing machine (1) and that each storage device (2) is respectively chargeable by way of the second shunting switch (6) and emptiable by way of the output belt (7).

5. Packing plant according to claim 4, characterised thereby, that several units (a, b, c and so forth) each of a respective packing machine (1a, 1b, 1c and so forth) and a respective storage device (2a, 2b, 2c and so forth) are arranged along the distribution line and that the packing machine of each unit is chargeable independently of any other with the articles directly by way of a first shunting switch (5a, 5b and so forth) and/or indirectly by way of a second shunting switch (6a, 6b and so forth) and the storage device (2a, 2b and so forth).

6. Packing plant according to claim 4 and 5, characterised thereby, that each storage device (2) of each unit (a, b and so forth) is chargeable from the second shunting switch (6) by way of a storage device feed belt (8) and emptiably by way of a storage device output belt (9) and the output belt (7) towards the packing machine (1).

7. Packing plant according to claim 4 to 6, characterised thereby, that the first shunting switches (5) are provided upstream of the second shunting switches (6) in the individual units (a, b, c and so forth) in the conveying direction of the distribution line.

8. Packing plant according to one or more of the claims 4 to 6, characterised thereby, that a control equipment (12) is provided for the detection of the readiness for reception of each packing machine and of the readiness for reception and the degree of filling of each storage device (2) as well as for the controlling of the shunting switches (5, 6), the storage devices (2) and the belts (7, 8, 9).

9. Packing plant according to one of the claims 4 to 6, characterised thereby, that the packing machines (1) and the storage devices (2) can each be switched off one independently of the other.

10. Packing plant according to one of the claims 4 to 6, characterised thereby, that both the shunting switches (5, 6) are pivotable upwardly or downwardly.

## Revendications

1. Procédé de transfert de rangées transversales d'objets (10) se déplaçant de manière continue sur un transporteur sans fin, en particulier des produits de confiserie tels que tablettes de chocolat, barres, pralines et autres, dans plusieurs machines d'emballage (1), dans lequel les objets (10) sont amenés en rangées par un premier aiguillage (5), soit à la machine d'emballage précédente, soit à la machine d'emballage suivante, puis sont réunis en une rangée devant chaque machine d'emballage sur une courroie de distribution (7) et sont emballés dans les machines d'emballage (1),
**caractérisé** en ce que les objets (10) sont, en cas de besoin, amenés en rangées dans la zone d'une ou plusieurs machines d'emballage (1) dérangées ou non dérangées, chaque fois au moyen d'un deuxième aiguillage (6), indépendant du premier aiguillage (5), chaque fois à un magasin (2) et sont stockés, et en ce que les magasins (2) sont vidés l'un après l'autre, en cas de surcapacité, sur des machines d'emballage (1) prêtes à les recevoir.

2. Procédé selon la revendication 1, caractérisé en ce que les magasins (2) sont remplis et/ou vidés l'un après l'autre par échelons qui correspondent à un partie de leur capacité de réception.

3. Procédé selon la revendication 1 ou 2, caractérisé en ce qu'un ou plusieurs magasins (2) sont remplis et vidés simultanément - même, le cas échéant, à des vitesses différentes.

4. Installation d'emballage pour la mise en oeuvre du procédé selon les revendications 1 à 3, avec plusieurs machines d'emballage (1) disposées le long d'une voie de répartition, auxquelles les objets (10) sont amenés individuellement l'un après l'autre dans le sens des rangées transversales, chaque fois par une courroie de distribution (7) pour y être emballés, dans laquelle il est prévu pour chaque machine d'emballage (1) un poste d'alimentation avec une courroie d'alimentation (3) et une courroie de transfert (4), ainsi qu'un aiguillage (5) formé entre la courroie d'alimentation et la courroie de transfert, conduisant à la courroie de distribution (7) respective,
**caractérisée** en ce qu'à chaque machine d'emballage (1) est associé chaque fois un magasin (2) pour le stockage intermédiaire d'objets (10), en ce que pour chaque machine d'emballage (1) il est prévu un deuxième aiguillage (6), et en ce que chaque magasin (2) peut chaque fois être alimenté par l'intermédiaire du deuxième aiguillage (6) et être vidé par l'intermédiaire de la courroie de distribution (7).

5. Installation d'emballage selon la revendication 4, caractérisée en ce que le long de la voie de répartition sont disposées plusieurs unités (a, b, c, etc.) constituées chacune d'une machine d'emballage (1a, 1b, 1c, etc...) et d'un magasin (2a, 2b, 2c, etc.), et en ce que la machine d'emballage de chaque unité peut être alimentée avec les objets indépendamment l'une de l'autre, directement par un premier aiguillage (5a, 5b, etc.) et/ou indirectement par un deuxième aiguillage (6a, 6b, etc.) par l'intermédiaire du magasin (2a, 2b, etc.).

6. Installation d'emballage selon les revendications 4 et 5, caractérisée en ce que chaque magasin (2) de chaque unité (a, b, etc.) peut être alimenté par le deuxième aiguillage (6) par l'intermédiaire d'une courroie (8) d'alimentation du magasin et peut être vidé vers la machine d'emballage (1) par l'intermédiaire d'une courroie (9) de vidage du magasin et de la courroie de distribution (7).

7. Installation d'emballage selon les revendications 4 à 6, caractérisée en ce que les premiers aiguillages (5) sont prévus en avant des deuxièmes aiguillages (6) dans les diverses unités (a, b, c, etc.) dans le sens de transport de la voie de répartition.

8. Installation d'emballage selon une ou plusieurs des revendications 4 à 6, caractérisée en ce qu'il est prévu un dispositif de commande (12) pour saisir l'état prêt à recevoir de chaque machine d'emballage et l'état prêt à recevoir et le taux de remplissage de chaque magasin (2), ainsi que pour commander les aiguillages (5, 6), les magasins (2) et les courroies (7, 8, 9).

9. Installation d'emballage selon une des revendications 4 à 6, caractérisée en ce que les machines d'emballage (1) et les magasins (2) peuvent être débranchés individuellement, indépendamment les uns ou les unes des autres.

10. Installation d'emballage selon une des revendications 4 à 6, caractérisée en ce que les deux aiguillages (5, 6) peuvent être basculés vers le haut ou vers le bas.
